# FASCICULE DE BREVET EUROPEEN

(11) **EP 2 819 074 B1**
(45) Date de publication et mention de la délivrance du brevet: **14.11.2018**
(21) Numéro de dépôt: 14173497.0
(22) Date de dépôt: 23.06.2014
(51) Int. Cl.: G06Q 10/10

(54) **Procédé de gestion d'un carnet d'adresses utilisateur déporté, et programme d'ordinateur et serveur d'applications afférents**
Verfahren zum Verwalten eines entfernten Benutzer-Adressbuchs, entsprechendes Computerprogramm und entsprechender Anwendungsserver
Method for managing a remote user address book, and related computer program and application server

(30) Priorité: 28.06.2013 FR 1356335
(43) Date de publication de la demande: 31.12.2014
(73) Titulaire: Orange, 75015 Paris (FR)
(72) Inventeur: Bertin, Emmanuel, 14530 Luc-Sur-Mer (FR); Cazeaux, Stéphane, 14280 Authie (FR)
(74) Mandataire: Orian, Yvette Suzanne

(56) Documents cités:
- EP-A1- 2 081 358
- WO-A1-2010/032125
- US-A1- 2005 157 858
- US-A1- 2010 203 874
- US-A1- 2011 082 896
- US-B1- 7 187 932
- Anonymous: "Session Initiation Protocol - Wikipédia", , 7 June 2013 (2013-06-07), XP55223088, Retrieved from the Internet: URL:https://fr.wikipedia.org/w/index.php?t itle=Session_Initiation_Protocol&oldid=938 56233 [retrieved on 2015-10-23]
- Simon Znaty ET AL: "SIP : Session Initiation Protocol", , 1 January 2005 (2005-01-01), XP055223178, Retrieved from the Internet: URL:http://www.efort.com/r_tutoriels/SIP_E FORT.pdf [retrieved on 2015-10-23]
- "SIP Session Initiation Protocol;SIP", ETSI DRAFT; SIP, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive, 16 May 2002 (2002-05-16), pages 1-92, XP014118559, [retrieved on 2002-05-16]

## Description

### Arrière-plan de l'invention

L'invention se rapporte au domaine général des télécommunications.

Elle concerne plus particulièrement un procédé et un dispositif de serveur permettant de gérer un carnet d'adresses utilisateur déporté, c'est-à-dire stocké en dehors d'un équipement utilisateur, en particulier hébergé sur un coeur de réseau.

Certains exploitants de réseaux de télécommunications offrent à leurs abonnés un service de maintien, au niveau de l'infrastructure du réseau, d'un carnet d'adresses personnel déporté. Ce carnet d'adresses déporté est renseigné à partir des données établies sur l'un voire plusieurs des dispositifs de l'utilisateur (par exemple, mobile, tablette, assistant numérique personnel, etc.) qui dispose(nt) d'une fonction de communication sur le réseau concerné.

Les services actuels nécessitent l'installation d'un logiciel applicatif spécifique sur le dispositif de communication de l'utilisateur, notamment un logiciel applicatif mettant en oeuvre une synchronisation régulière entre le carnet d'adresses stocké dans le dispositif de l'utilisateur et un carnet d'adresses parallèle stocké au niveau d'un serveur de l'exploitant du réseau. Bien évidemment, lorsque le carnet d'adresses déporté géré par l'exploitant du réseau regroupe les détails des contacts établis sur plusieurs dispositifs d'un même utilisateur, il faut que l'utilisateur installe un logiciel applicatif approprié sur chacun des dispositifs concernés, ce qui devient complexe, voire onéreux. L'usage des services actuels est relativement faible, peut-être parce que les utilisateurs sont découragés par le besoin d'installer les logiciels associés.

En ce qui concerne les protocoles et systèmes standardisés évoqués dans ce texte, il convient de noter que l'on entend :
- par SIP : le protocole connu sous l'appellation « Session Initiation Protocol » défini par l'IETF (Internet Engineering Task Force), notamment la version 2.0 du protocole décrite par la spécification RFC3261, ainsi que toute ses extensions et variations, et les éléments désignés « requête SIP », « requête SIP OPTIONS », « réponse SIP », « réponse SIP 200 OK », correspondent aux éléments des même nom définis par le protocole SIP ;
- par IMS : le cadre architectural pour livraison de service multimédias en réseau IP (« Internet Protocol ») connu sous l'appellation « IP Multimedia Subsystem » tel que défini selon la spécification 3GPP (Third Generation Partnership Project) à partir de sa version 5;
- par filtre iFC : un critère de filtrage du type connu sous l'appellation « initial filter criteria » défini dans le cadre du système IMS (en tant qu'une partie du profil d'abonné IMS) ; et
- par RCS : l'ensemble de services connus sous l'appellation « Rich Communication Services » tel que standardisé par le GSMA (GSM Association, GSM voulant dire Global System for Mobiles).

Le document US 7187932 décrit un système selon lequel un carnet d'adresse personnel est mis à jour en fonction d'une règle, par exemple, en fonction du nombre d'appels passés par l'utilisateur vers un même destinataire. A cette fin des données d'adresses associées aux messages qui transitent sur le réseau téléphonique sont extraites au cours d'un appel entre deux postes.

### Objet et résumé de l'invention

L'invention permet notamment d'améliorer la situation exposée ci-dessus en proposant un nouveau procédé de gestion d'un carnet d'adresses utilisateur déporté.

Dans le cadre de la convergence des services de téléphonie et des services basés sur informatique, des services dits « avancés » sont proposés aux utilisateurs. Parmi ces services avancés on prévoit un service qui permet aux utilisateurs de communiquer avec leurs interlocuteurs selon différents modes de communication en fonction des capacités des équipements des uns et des autres. Des services avancés de ce genre sont prévus, par exemple, par le système RCS commercialisé dans divers pays sous le nom joyn^{SM}. Il s'agit, d'offrir aux utilisateurs le choix, par exemple, entre un appel vocal classique, un appel vidéo, un appel qui comporte le transfert d'un fichier informatique, et autres. Ce choix de mode de communication est rendu possible grâce à une procédure de découverte préalable des capacités des équipements des interlocuteurs prévus de l'utilisateur.

La présente invention propose la création et la mise à jour d'un carnet d'adresses utilisateur déporté, par exploitation des messages d'interrogation de capacités prévus par des services avancés du genre évoqué ci-dessous.

Notamment, l'invention propose un nouveau procédé de gestion d'un carnet d'adresses utilisateur déporté, le procédé comprenant :
une étape d'extraction, depuis un message transitant sur un réseau de communication, de renseignements se rapportant à un expéditeur et à un destinataire dudit message,
une étape de sélection, en fonction de l'expéditeur dudit message, d'un carnet d'adresses déporté à créer ou à mettre à jour, et
une étape de création ou de mise à jour d'au moins un enregistrement du carnet d'adresses sélectionné à l'étape de sélection, en fonction des renseignements de destinataire extraits dudit message ;
caractérisé en ce que :
   le message correspond à une requête SIP OPTIONS du protocole d'initiation de session SIP (Session Initiation Protocol), et que l'étape d'extraction comporte l'extraction de renseignements depuis ladite requête SIP OPTIONS étant envoyé par un équipement dudit expéditeur et constituant une interrogation quant aux capacités de l'équipement dudit destinataire.

Grâce à l'invention il n'est pas nécessaire d'installer un logiciel applicatif spécifique sur l'équipement de l'utilisateur afin de pouvoir bénéficier d'un carnet d'adresses déporté, notamment un carnet d'adresses hébergé au niveau du coeur de réseau. Tant que l'équipement de l'utilisateur est configuré pour émettre des messages d'interrogation de capacités d'équipement de type SIP OPTIONS vers ses interlocuteurs (notamment les contacts du carnet d'adresses stocké au niveau de son équipement utilisateur) le procédé prévu par l'invention est en mesure d'obtenir, à partir de ces messages, les données nécessaires pour renseigner et tenir à jour un carnet d'adresses côté réseau.

Divers messages transitant sur un réseau de communication comportent des renseignements relatifs aux expéditeurs et aux destinataires de ceux-ci. Toutefois, l'établissement du carnet d'adresses déporté en se servant des messages d'interrogation de capacités d'équipement, dont la requête SIP OPTIONS, offre divers avantages dont on va en exposer deux.

D'abord, comme l'émission d'un message d'interrogation de capacités d'équipement est souvent déclenchée suite à une mise à jour du carnet d'adresses établi sur un équipement utilisateur, l'emploi de ces messages en tant que source de renseignements pour alimenter le carnet d'adresses déporté assure un décalage moindre entre la mise à jour du carnet d'adresses sur l'équipement utilisateur et celle du carnet d'adresses déporté.

Deuxièmement, dans certains cas le fait de s'inscrire auprès d'un service avancé qui permet des modes de communications différentes engendre l'émission d'un jeu de messages d'interrogation de capacités d'équipement, dirigés vers tous les contacts du carnet d'adresses stocké dans cet équipement utilisateur, Se servir donc, des messages d'interrogation de capacités d'équipement en tant que source de renseignements pour alimenter le carnet d'adresses déporté tend à créer dans un seul coup, côté réseau, une image complète du carnet d'adresses stocké sur l'équipement utilisateur. En particulier, selon cette approche l'établissement d'un carnet d'adresses déporté complet ne nécessite pas d'attendre à ce que l'utilisateur ait appelé à ses différents contacts.

En outre l'invention prévoit un programme d'ordinateur comportant des instructions pour la mise en oeuvre du procédé évoqué ci-dessus lorsque ce programme est exécuté par un processeur.

Selon certains modes de réalisation de l'invention le carnet d'adresses déporté est hébergé au niveau d'un serveur du réseau de communication, ledit serveur mettant en oeuvre les différentes étapes d'extraction de renseignements, de sélection de carnet d'adresses, et de mise à jour du carnet d'adresses sélectionné.

Le serveur peut appartenir à un coeur de réseau, par exemple un coeur de réseau IMS. Dans le présent document, par « mise à jour » d'un carnet d'adresses on entend aussi bien un contrôle des enregistrements du carnet d'adresses et la constatation qu'un changement n'est pas nécessaire, qu'une étape qui comporte le changement du contenu du carnet d'adresses.

Des réseaux IMS se répandent dans le cadre de la convergence des services de téléphonie et des services basés sur informatique. Ils sont exploités, notamment, pour l'offre RCS et ils utilisent, pour établir des séances de communications, le protocole SIP. Dans le cadre du protocole SIP on peut identifier, en tant que messages d'interrogation de capacités d'équipement, les messages du genre SIP OPTIONS et, en tant que réponses aux messages d'interrogation de capacités d'équipement, certains des messages du genre « SIP 200 OK ».

Toutefois, l'invention s'applique également à d'autres architectures de coeurs de réseau que l'IMS, et elle n'est pas limitée à des réseaux qui supportent l'offre RCS.

Selon certains de ses modes de réalisation, le procédé selon l'invention comprend : une étape d'extraction, depuis une réponse à ladite requête SIP OPTIONS, de renseignements se rapportant à l'expéditeur de ladite réponse, et une étape de mise à jour du carnet d'adresses déporté sélectionné à l'étape de sélection, en fonction des renseignements d'expéditeur extraits de ladite réponse.

Les réponses émises par les contacts d'un utilisateur aux requêtes SIP OPTIONS émises par ce dernier peuvent comporter des informations, relatives aux contacts, qui ne figurent pas encore dans le carnet d'adresses déporté établi pour l'utilisateur en question (et qui ne figurent pas non plus dans le carnet d'adresses stocké sur l'équipement utilisateur). Il peut s'agir, par exemple, d'informations d'une carte de visite dont le contenu ou l'adresse est compris dans la réponse au message d'interrogation de capacités d'équipement. Un autre exemple consiste en l'enregistrement dans le carnet d'adresses déporté de renseignements concernant les capacités des équipements utilisateurs des différents contacts de cet utilisateur. Le contenu du carnet d'adresses déporté peut être étendu en y ajoutant de telles informations extraites des réponses aux requêtes SIP OPTIONS.

Le renseignement du carnet d'adresses déporté, sur la base des informations comprises dans les réponses aux requêtes SIP OPTIONS, permet donc d'enrichir le contenu du carnet d'adresses déporté sans intervention aucune de la part de l'utilisateur et en se servant de renseignements qui ne sont pas nécessairement déjà connus de l'utilisateur.

Certains modes de réalisation de l'invention offrent aux contacts d'un utilisateur la possibilité de mettre à jour les enregistrements qui les concernent dans le carnet d'adresses déporté se rapportant à cet utilisateur. Cette mise à jour peut se faire d'une part au moyen d'une interface web dont l'adresse est fournie au contact via un champ dans la requête SIP OPTIONS. D'autre part, cette mise à jour peut se faire au moyen d'une carte de visite dont le contenu ou l'adresse est inclus dans la réponse à la requête SIP OPTIONS, la carte de visite étant lue côté réseau afin de mettre à jour le carnet d'adresses de l'utilisateur concerné. Suite à une telle mise à jour il est probable que le carnet d'adresses déporté comporte des informations qui ne sont pas encore connues de l'utilisateur.

Dans un mode de réalisation particulier, un contact peut se connecter à un serveur lui permettant de visualiser les personnes dans le carnet d'adresses desquels il figure et de gérer depuis une interface unique les informations (nom, prénom, métier, N° tel, mail...) qu'il veut voir figurer. Les informations gérées sont les mêmes pour tous ou adaptées en fonctions des propriétaires des carnets d'adresses

Certains des modes de réalisation de l'invention prévoient la synchronisation d'un carnet d'adresses d'équipement utilisateur avec le carnet d'adresses déporté pour ainsi enrichir le carnet d'adresses côté équipement utilisateur avec des informations qui sont à ce moment inconnues de l'utilisateur (par exemple des informations en provenance d'un contact). Par exemple, selon sa configuration un serveur de gestion de carnet d'adresses ayant mis à jour, sur la base d'informations reçues de la part d'un contact, un carnet d'adresses déporté peut être conçu pour procéder à une synchronisation avec le carnet d'adresses stocké sur un équipement utilisateur.

Par ailleurs, lorsque l'équipement d'un contact fournit au serveur de gestion de carnet d'adresses déporté des informations aptes à enrichir ce carnet d'adresses l'équipement du contact peut transmettre les informations correspondantes à l'équipement utilisateur aussi (afin que ce dernier puisse mettre à jour son carnet d'adresses local).

L'invention prévoit aussi un serveur d'applications comprenant :
une interface configurée pour communiquer avec un module de stockage configuré pour stocker un carnet d'adresses utilisateur hébergé en dehors d'un équipement utilisateur,
une unité d'extraction de renseignements configurée pour extraire, depuis un message, transitant sur un réseau de communication, de renseignements se rapportant à l'expéditeur et au destinataire dudit message ; et
une unité de gestion de carnet d'adresses configuré pour :
   sélectionner, en fonction de l'expéditeur dudit message, un carnet d'adresses à créer ou à mettre à jour dans ledit module de stockage, et
   créer ou mettre à jour les enregistrements de contact du carnet d'adresses sélectionné, en fonction de renseignements de destinataire extraits dudit message par l'unité d'extraction;
caractérisé en ce que ledit message correspond à une requête SIP OPTIONS du protocole d'initiation de session SIP (Session Initiation Protocole) et que l'unité d'extraction de renseignements est configurée pour extraire des renseignements depuis ladite requête SIP OPTIONS , ladite requête SIP OPTIONS étant envoyé par un équipement dudit expéditeur et constituant une interrogation quant aux capacités de l'équipement dudit destinataire.

Des serveurs d'applications conformes à l'invention permettent la gestion d'un carnet d'adresses résidant sur l'infrastructure du réseau ou accessibles à cette dernière (c'est-à-dire à l'extérieure de l'équipement utilisateur) sans nécessiter le chargement d'un logiciel applicatif spécifique dans un équipement de l'utilisateur.

Selon certains modes de réalisation de l'invention, le serveur d'applications peut être implémenté sur un équipement qui, en plus de la fonction de création ou de mise à jour du carnet d'adresses déporté, assure aussi bien la fonction d'extraction de renseignements à partir des requêtes SIP OPTIONS. Une telle architecture permet de réduire le nombre d'éléments nécessaires à la mise en oeuvre du procédé.

Selon d'autres modes de réalisation de l'invention, les fonctions du serveur d'applications sont regroupés sur deux modules (voire plus), ces derniers correspondant éventuellement à des équipements distincts, dont un premier module qui met en oeuvre la fonction de création ou de mise à jour du carnet d'adresses déporté et un second module qui assure l'extraction de renseignements depuis les requêtes SIP OPTIONS. Selon un tel agencement le second module a plus d'indépendance du premier et peut servir pour offrir plusieurs services différents à l'utilisateur.

L'aiguillage des requêtes SIP OPTIONS vers le serveur d'applications peut être accompli de différentes manières. Selon certains modes de réalisation de l'invention dans le cadre d'un coeur de réseau IMS, l'étape d'aiguillage comprend l'exploitation d'un critère de filtrage (filtre iFC) au sein de l'entité S-CSCF (« serving call session control function ») du réseau. Selon d'autres modes de réalisation de l'invention dans le cadre d'un coeur de réseau IMS, l'acheminement voulu des messages d'interrogation de capacités d'équipement vers le serveur d'applications est réalisé à l'aide d'un élément connu sous l'appellation « route list » défini par programmation préalable du terminal.

L'invention prévoit, donc, un serveur d'un réseau de communications caractérisé en ce qu'il comprend : une unité d'aiguillage configuré pour appliquer un critère de filtrage commandant l'aiguillage des messages d'interrogation de capacités d'équipement vers un serveur de gestion de carnet d'adresses.

Selon différents modes de réalisation de l'invention le critère de filtrage (par exemple un filtre iFC) peut être soit générique - adapté à acheminer vers le serveur de gestion de carnet d'adresses tout message de type particulier (toute requête SIP OPTIONS) - soit spécifique - configuré pour acheminer vers le serveur les messages d'interrogation de capacités d'équipement émis par un utilisateur déterminé (soit toutes les messages provenant de cet utilisateur soit les messages d'interrogation de capacités d'équipement).

L'entité S-CSCF d'un réseau IMS est déjà configurée pour choisir le serveur d'applications vers lequel il convient d'envoyer une requête SIP provenant d'un utilisateur particulier, cette décision étant basée sur un profil d'abonné IMS de l'utilisateur et, notamment, sur un filtre iFC défini selon ce profil. Dans certains modes de réalisation de l'invention mis en oeuvre dans le cadre d'un coeur de réseau IMS, l'exploitation d'un filtre iFC afin d'aiguiller des requêtes SIP OPTIONS vers un serveur associé à la gestion du carnet d'adresses résidant sur le coeur de réseau permet, donc, l'interception des requêtes SIP OPTIONS - à des fins de gestion de carnet d'adresses - avec très peu de modifications d'un réseau existant.

Certains modes de réalisation du procédé et du serveur d'applications selon l'invention permettent le renseignement du carnet d'adresses déporté, non seulement sur la base d'informations extraites des requêtes SIP OPTIONS provenant de l'utilisateur mais aussi sur la base d'informations contenues dans une carte de visite comprise dans une réponse à une telle requête (par exemple une carte de visite comprise dans une réponse à un message SIP OPTION du type SIP 200 OK). Le serveur envoie des informations supplémentaires en réponse, par exemple pour synchroniser le terminal avec des infos stockées dans le serveur.

### Brève description des dessins

D'autres caractéristiques et avantages de la présente invention ressortiront de la description faite ci-dessous, en références aux dessins annexés qui en illustrent des exemples de réalisation dépourvus de tout caractère limitatif. Sur les figures :
- la figure 1 est un schéma représentant l'agencement d'un poste émetteur, d'un poste récepteur et d'une infrastructure réseau selon un exemple simplifié d'architecture de réseau IMS classique ;
- la figure 2 représente une séquence de messages transmis dans un réseau IMS classique selon l'exemple de la figure 1, lors de l'envoi d'une requête SIP OPTIONS depuis le poste émetteur vers le poste récepteur;
- la figure 3 représente le format de certains messages conformes au protocole SIP et, plus précisément,
   - la figure 3A montre un exemple de requête SIP OPTIONS, et
   - la figure 3B montre un exemple de réponse SIP 200 OK;
- la figure 4 représente un schéma fonctionnel montrant les étapes d'un procédé de gestion de carnet d'adresses selon un mode de réalisation de l'invention ;
- la figure 5 est un schéma représentant l'agencement d'un poste émetteur, d'un poste récepteur et d'une infrastructure réseau selon un exemple simplifié d'un réseau IMS comportant des composants pour mettre en oeuvre un mode de réalisation de l'invention;
- la figure 6 représente une séquence de messages transmis, conforme à un mode de réalisation de l'invention, dans le réseau selon l'exemple de la figure 5, lors de l'envoi d'une requête SIP OPTIONS depuis le poste émetteur vers le poste récepteur ;
- la figure 7 est un schéma fonctionnel montrant les étapes d'un premier procédé complémentaire mis en oeuvre selon un mode de réalisation de l'invention ;
- la figure 8 représente une séquence de messages transmise, selon le premier procédé complémentaire, dans le réseau selon l'exemple de la figure 5, lors de l'envoi d'une requête SIP OPTIONS depuis le poste émetteur vers le poste récepteur et du renvoi d'une réponse SIP 200 OK qui comporte une carte de visite;
- la figure 9 représente un mode de réalisation de l'architecture montrée à la figure 5;
- la figure 10 représente de manière schématique l'architecture d'un serveur de gestion de carnet d'adresses selon un mode réalisation de l'invention ; et
- la figure 11 représente de manière schématique l'architecture d'un serveur SIP de fonction S-CSCF selon un mode de réalisation de l'invention.

### Description détaillée de l'invention

L'invention sera maintenant décrite en se référant à certains modes de réalisation, notamment dans le cadre de l'utilisation du service RCS mis en oeuvre à l'aide d'un coeur de réseau IMS en employant le protocole SIP pour établir les séances de communication. Toutefois, il convient de rappeler que l'invention n'est pas limitée à l'établissement d'un carnet d'adresses côté réseau lors de l'utilisation du service RCE ni à l'établissement d'un carnet d'adresses quand le coeur de réseau sur lequel transite les messages d'interrogation de capacités est un réseau IMS.

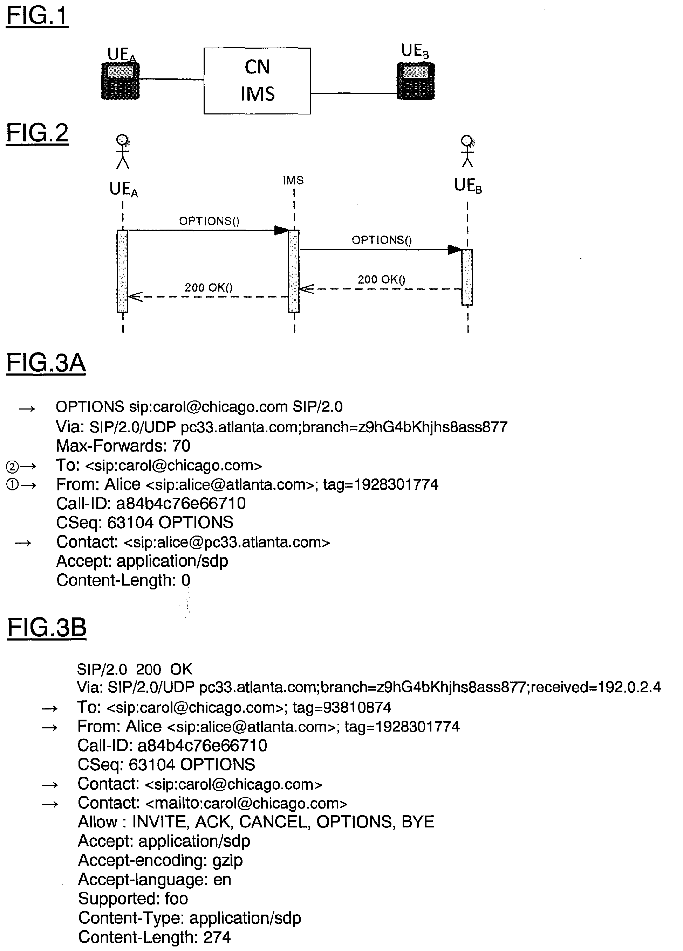

La figure 1 est un schéma représentant de manière simplifiée l'agencement d'un poste émetteur UE_{A}, d'un poste récepteur UE_{B} et d'un coeur de réseau IMS dans un exemple de réseau IMS classique. La figure 1, ainsi que les autres figures, omet certains éléments classiques du réseau de communication qui ne sont pas pertinents à la compréhension de l'invention (notamment les différentes couches, les divers serveurs d'applications, etc.).

Selon l'exemple de la figure 1 les postes en communication UE_{A}, UE_{B} sont tous les deux des téléphones portables SIP, ces portables sont reliés par le coeur de réseau IMS afin de mettre en oeuvre le service RCS. Toutefois, il convient de rappeler que le type d'équipement utilisateur employé pour émettre et recevoir un message n'est pas particulièrement limité selon l'invention : l'invention s'applique, par exemple, également à des mobiles ou tablettes disposant d'un logiciel applicatif permettant une fonction de communication - « soft phone » - ainsi qu'à des postes mobiles ou fixes de toute sorte configurés pour établir des sessions de communication, éventuellement à l'aide d'une passerelle.

La figure 2 indique, de manière simplifiée, des messages qui transitent entre les différents éléments de la configuration classique de la figure 1 lors de l'envoi d'une requête SIP de type SIP OPTIONS depuis le poste UE_{A} vers le poste UE_{B}.

A différents moments un poste UE_{A} qui participe au service RCS envoie un message SIP OPTIONS aux contacts de son carnet d'adresses local (c'est-à-dire le carnet d'adresses stocké dans cet équipement utilisateur). Un message SIP OPTIONS est envoyé à tous les contacts du carnet d'adresses lors de l'activation du service RCS, puis de façon périodique. En outre, lorsqu'un contact est ajouté ou modifié par l'utilisateur dans son carnet d'adresses, un message SIP OPTIONS est envoyé au contact concerné. Un message SIP OPTIONS est aussi envoyé au poste d'un contact particulier lors de la sélection de ce contact par l'utilisateur dans son carnet d'adresses et après l'établissement d'un appel avec le contact. La figure 2 indique par OPTIONS() une requête SIP OPTIONS expédiée par un équipement utilisateur UE_{A} et reçue au niveau du coeur de réseau IMS, et une requête SIP OPTIONS correspondante envoyée par l'infrastructure IMS vers un équipement utilisateur UE_{B} destinataire de la requête. La procédure d'acheminement des messages à travers des serveurs proxy etc. étant bien connue on omet de l'exposer ici.

Un poste UE_{B} récepteur d'une requête SIP OPTIONS, dont le propriétaire bénéficie du service RCS et s'est enregistré auprès du service RCS, y répond en renvoyant une réponse SIP de type SIP 200 OK. Ce message SIP 200 OK comporte des paramètres indiquant les capacités du poste UE_{B} vis-à-vis des possibilités offertes par le service RCS. Par ailleurs, la réponse SIP 200 OK peut comporter une carte de visite relative au propriétaire du poste UE_{B}. ou toute autre information permettant de caractériser ce propriétaire La figure 2 indique par SIP 200 OK() une réponse SIP 200 OK expédiée en réponse à un message SIP OPTIONS par l'équipement utilisateur UE_{B} et reçue au niveau du coeur de réseau IMS et une réponse SIP 200 OK correspondante envoyée par l'infrastructure IMS vers l'équipement utilisateur UE_{A}.

Par contre, si le destinataire de la requête SIP OPTIONS n'est pas enregistré auprès du service RCS, le réseau IMS envoie un message SIP 400 ou SIP 480 (non représenté sur la figure 2) au poste UE_{A}.

La figure 3 représente un exemple d'une requête SIP OPTIONS (Fig.3A) et d'une réponse SIP 200 OK (Fig.3B); ces exemples proviennent de la spécification RFC3261. Une requête SIP OPTIONS correspond à un message d'interrogation de capacités qui cherche à procurer, de la part d'un contact de l'expéditeur de la requête, des renseignements quant aux capacités de l'équipement de ce contact (notamment les capacités en termes de mode de communication: appel vocal, appel vidéo, réception de messages, etc.). La requête SIP OPTIONS comporte aussi certains renseignements relatifs à l'expéditeur et relatifs au destinataire de la requête, les champs concernés sont indiqués par des flèches sur la Fig. 3A. La réponse SIP 200 OK émise pour répondre à la requête SIP OPTIONS fournit les renseignements de capacités voulus et elle comporte aussi certaines informations relatives à l'expéditeur de la réponse (et quelques indications à propos du destinataire de la réponse), ces dernières informations étant aussi indiquées par des flèches sur la Fig.3B.

Une requête SIP OPTIONS comporte certains éléments obligatoires. Les flèches 1 et 2 sur la Fig.3A indiquent, parmi les en-têtes de message obligatoires d'un message SIP OPTIONS, les paramètres « To » et « From » qui indiquent, respectivement, l'expéditeur de la requête SIP OPTIONS et le destinataire de cette requête. Par ailleurs, parmi les en-têtes de messages permis dans un message SIP il y a un en-tête « Contact » qui, dans une requête SIP OPTIONS, indique l'adresse à laquelle le destinataire de la requête peut atteindre l'expéditeur et, dans une réponse SIP 200 OK, indique l'adresse à laquelle l'expéditeur de la requête d'origine peut atteindre le destinataire. Par ailleurs, une réponse SIP 200 OK peut comporter une carte de visite (non représenté sur la Fig.3B) qui comprend diverses coordonnées de l'utilisateur source de cette réponse.

Les inventeurs se sont rendus compte que l'obtention de renseignements de ce genre à partir d'une requête SIP OPTIONS (et, éventuellement, d'une réponse SIP 200 OK émise pour répondre à une requête SIP OPTIONS) pourrait permettre à un opérateur de réseau d'établir un carnet d'adresses regroupant les détails des contacts d'un utilisateur évitant ainsi le besoin d'installer un logiciel applicatif spécifique au niveau de l'équipement utilisateur. La même approche sert aussi à l'établissement d'un carnet d'adresses déporté dans un réseau employant un protocole, autre que SIP, qui implique l'envoi de messages d'interrogation de capacités d'équipement aux contacts d'un utilisateur.

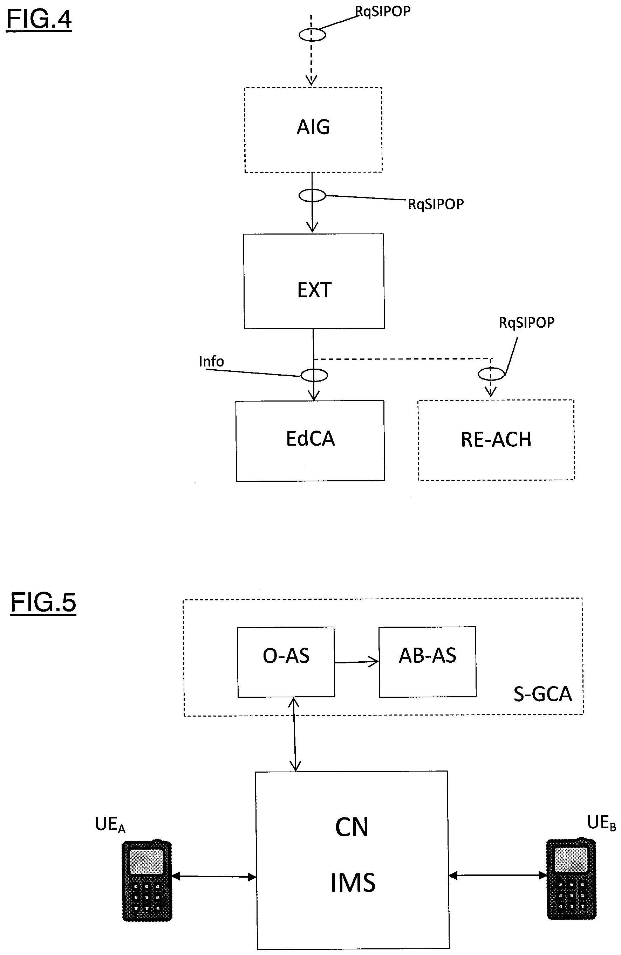

La figure 4 est un schéma fonctionnel qui expose les principales étapes d'un procédé de gestion de carnet d'adresses déporté, selon un mode de réalisation de l'invention dans le cadre d'un réseau IMS employant le protocole SIP. Le procédé de la figure 4 comporte une étape EXT d'extraction de renseignements à partir d'une requête SIP OPTIONS (désigné RqSIPOP sur la figure 4). Cette étape EXT est une étape d'extraction d'une requête SIP OPTIONS des renseignements relatifs à l'expéditeur et des renseignements relatifs au destinataire de cette requête, en se rappelant que le destinataire correspond à un contact de l'expéditeur du message. Sur la figure 4 les renseignements extraits de la requête SIP OPTIONS sont désignés Info. Par « extraction », on entend l'obtention des renseignements concernés sans supprimer ceux-ci de la requête SIP.

Le procédé de la figure 4 comporte ensuite une étape EdCA, c'est-à-dire une étape de création ou de mise à jour d'un carnet d'adresses stocké à l'extérieur de l'équipement utilisateur. L'étape de création ou de mise à jour du carnet d'adresses est réalisée sur la base des renseignements Info extraits de la requête SIP OPTIONS. L'étape de création ou de mise à jour du carnet d'adresses peut comporter diverses opérations, y compris, par exemple, la création de nouveaux carnets d'adresse, la création de nouveaux enregistrements dans un carnet d'adresses existant, le contrôle d'un enregistrement existant (entraînant, éventuellement, la correction de son contenu, et/ou l'ajout/suppression de renseignements), la suppression d'enregistrements de contact, et la suppression de carnets d'adresse. Selon le mode de réalisation on peut aussi déterminer et enregistrer la fréquence de consultation ou d'appel des contacts (à partir du nombre de requêtes SIP émis vers chaque contact, éventuellement prenant en compte le type de la requête SIP).

La présente invention n'est pas particulièrement limitée en ce qui concerne les éléments spécifiques qui sont extraits des messages d'interrogation (par exemple des requêtes SIP OPTIONS) et employés pour créer/mettre à jour le carnet d'adresses déporté. Quelques indications à ce sujet sont exposées ci-dessous à titre indicatif mais nullement limitatif.

Un message d'interrogation de capacités d'équipement émis dans le cadre d'un service qui permet un choix du mode de communication entre l'utilisateur et ses contacts comporte nécessairement des informations permettant l'identification de l'expéditeur du message d'interrogation concerné (dans le cas contraire l'équipement utilisateur ne recevrait pas les réponses des contacts). Le procédé selon l'invention exploite le fait que l'expéditeur d'un message d'interrogation de capacités d'équipement correspond à un utilisateur déterminé et qu'il convient, donc, d'établir un carnet d'adresses déporté qui est spécifique à cet expéditeur. Ainsi, selon le procédé de l'invention, lorsqu'on cherche à employer des informations contenus dans un message d'interrogation de capacités d'équipement pour renseigner un carnet d'adresses déporté il convient de se rapporter à l'identité de l'expéditeur du message d'interrogation afin d'identifier quel carnet d'adresses est concerné.

Selon certains modes de réalisation de l'invention, un identifiant de l'utilisateur est associé à un identifiant du carnet d'adresses déporté qui lui es propre, l'identifiant d'utilisateur employé étant récupérable depuis les messages d'interrogation de capacités émis par les équipements de l'utilisateur. Considérant l'exemple de la figure 3A, on peut se servir de l'adresse sip de la ligne indiquée par la flèche 1 en tant qu'identifiant de l'utilisateur Alice. Le carnet d'adresses déporté crée pour Alice est alimenté alors sur la base de tout renseignement approprié contenu dans un message d'interrogation de capacités qui indique cette même adresse sip en relation avec son expéditeur.

Différents identifiants peuvent servir pour identifier l'utilisateur associé à un carnet d'adresses déporté. Selon certains mode de réalisation de l'invention l'identifiant connu sous l'appellation « IP Multimedia Public Identity » (IMPU) est employé à cette fin.

Par ailleurs, il convient de mentionner qu'une requête SIP OPTIONS peut comporter des champs additionnels par rapport aux champs représentés sur la figure 3A.

En outre, dans le cadre des services avancés proposés actuellement, les messages d'interrogation de capacités d'équipement envoyés par un équipement utilisateur sont dirigés vers les contacts définis dans un carnet d'adresses stocké dans cet équipement. En d'autres termes, les destinataires des messages d'interrogation de capacités d'équipement émis par un expéditeur particulier correspondent aux contacts du carnet d'adresses de ce dernier. Ce fait est exploité selon le procédé de l'invention par la création ou la mise en oeuvre des enregistrements de contact du carnet d'adresses déporté, sur la base des renseignements de destinataires extraits des messages d'interrogation envoyés par l'utilisateur dont ceci est le carnet d'adresses déporté.

Considérant à nouveau l'exemple de la figure 3A, quand un message SIP OPTIONS indique Alice en tant qu'expéditeur, le carnet d'adresses déporté propre à Alice est sélectionné et le destinataire indiqué dans le message est considéré comme étant l'un des contacts d'Alice. Si suite à un contrôle du contenu du carnet d'adresses déporté propre à Alice il s'avère que le destinataire du message SIP OPTIONS actuel ne figure pas encore parmi la liste des contacts d'Alice, on rajoute au carnet d'adresses déporté un enregistrement de contact en y incluant tout renseignement approprié se rapportant au destinataire du message SIP OPTIONS et récupérable depuis ce message (par exemple l'adresse sip dans la ligne indiquée par la flèche 2 sur la figure 3A).

En principe les étapes d'extraction de renseignements et de création/mise à jour du carnet d'adresses montrées à la figure 4 pourraient être réalisées par l'un des composants qui interviennent dans l'acheminement classique des messages SIP OPTIONS. Toutefois, une telle solution entraînerait le besoin de modifier les équipements existants.

Une approche alternative consiste à intercepter les messages SIP OPTIONS en cours d'acheminement et de les acheminer vers un dispositif spécifique (par exemple un serveur d'applications) qui réaliserait les étapes d'extraction de renseignements et de création/mise à jour du carnet d'adresses. Pour ce faire, selon un mode de réalisation du procédé selon l'invention des étapes additionnelles AIG et RE-ACH sont mise en oeuvre (comme montré en pointillés sur la figure 4). L'étape désignée AIG comprend l'aiguillage d'une requête SIP OPTIONS vers le dispositif spécifique évoqué ci-dessus, et l'étape désignée RE-ACH correspond au réacheminement de la requête SIP OPTIONS vers son destinataire. Bien entendu, lorsque l'invention est mise en oeuvre dans un réseau employant un protocole autre que SIP on peut toujours se servir d'un dispositif spécifique de ce genre pour la réalisation des étapes d'extraction de renseignements et de création/mise à jour du carnet d'adresses.

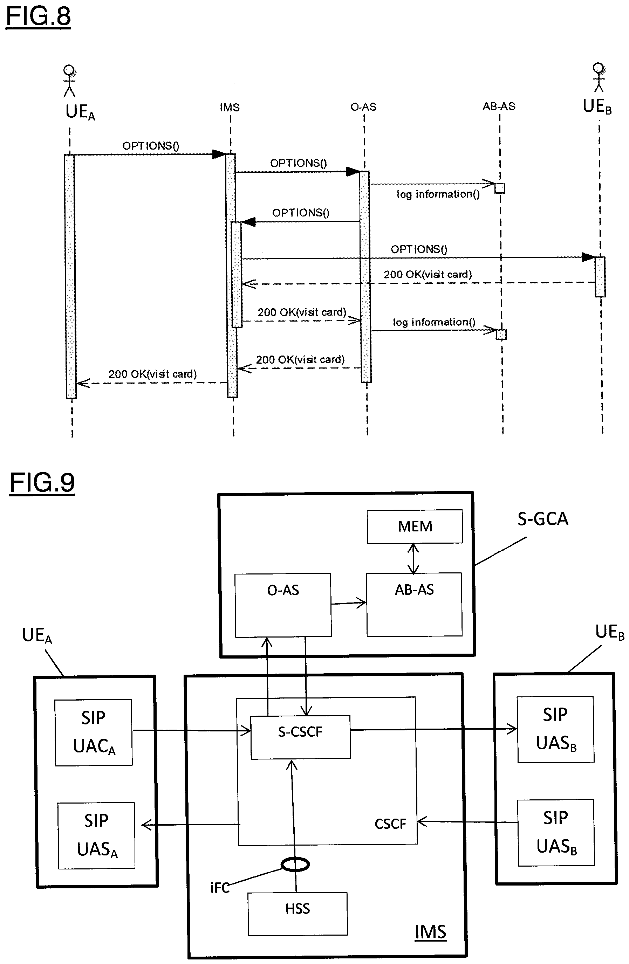

La figure 5 est un schéma qui montre de manière simplifiée l'agencement d'un poste émetteur UE_{A}, d'un poste récepteur UE_{B} et d'un coeur de réseau IMS (désigné CN IMS sur la figure 5), dans un exemple de réseau IMS bénéficiant d'un serveur d'applications S-GCA qui permet l'établissement, côté réseau, d'un carnet d'adresses utilisateur conformément à un mode de réalisation du procédé de l'invention. Un exemple de la mise en oeuvre de l'architecture de la figure 5 est représenté sur la figure 9.

Selon le mode de réalisation des figures 5 et 9 des messages SIP OPTIONS sont interceptés et dirigés vers le dispositif de serveur S-GCA qui sert à la gestion du carnet d'adresses maintenu à l'extérieur de l'équipement utilisateur.

Selon les modes de réalisation des figures 5 et 9 le serveur S-GCA comprend deux serveurs, dont le premier (désigné AB-AS sur les figures) sert à la gestion du carnet d'adresses tandis que le second (désigné O-AS) sert à l'acheminement de requêtes et à l'extraction de renseignements à partir de celles-ci. La distribution de la fonctionnalité sur deux serveurs permet de prévoir l'extension future du système à d'autres services optionnels, auxquels le serveur O-AS gérera l'accès. On peut, donc, nommer le serveur O-AS un serveur d'options. Il convient de noter que l'on peut mettre en oeuvre le serveur DS-GCA d'autres manières comme, par exemple, d'employer un seul serveur qui intègrent toutes les fonctions nécessaires à l'établissement et maintien du carnet d'adresses. Bien entendu, les différents serveurs peuvent être implémentés sur un nombre variable d'équipements.

Bien que ceci ne ressorte pas des figures, le serveur S-GCA offre aux utilisateurs des fonctions d'interrogation et d'actualisation des carnets d'adresse qu'il gère, et éventuellement des fonctions de création/mise à jour, de manière semblable à d'autres systèmes qui hébergent des carnets d'adresse utilisateur déportés. Ces fonctions étant classiques les détails de leur mise en oeuvre ne sont pas exposés dans ce document. Le serveur S-GCA peut aussi offrir la possibilité de re-synchroniser le contenu du serveur AB-AS avec l'équipement utilisateur par un moyen autre que les requêtes SIP OPTIONS.

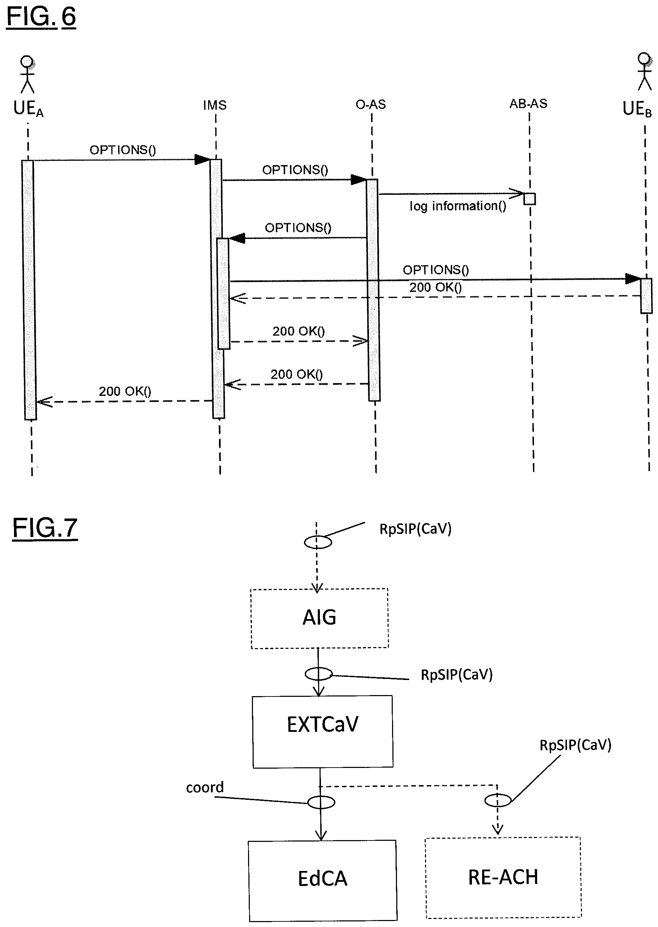

La figure 6 représente de manière simplifiée, des messages qui transitent entre les différents éléments de la configuration de la figure 5 lors de l'envoi d'une requête SIP de type SIP OPTIONS depuis le poste UE_{A} vers le poste UE_{B} dans le cadre d'un certain mode de réalisation de l'invention.

Comme dans le cas classique représenté à la figure 2, le poste émetteur UE_{A} envoie une requête SIP OPTIONS qui arrive au niveau du coeur de réseau IMS. Or, à la différence du cas classique, selon l'exemple de la figure 6 le coeur de réseau IMS envoie un message SIP OPTIONS correspondant au serveur S-GCA et, notamment, au serveur d'options O-AS. Le serveur O-AS traite les requêtes SIP OPTIONS pour en extraire des renseignements voulus concernant les contacts d'un utilisateur déterminé. Le serveur O-AS transmet ces renseignements (désignés log information () sur la figure 6) au serveur AB-AS qui réalise, alors, le renseignement approprié du carnet d'adresses relatif à l'utilisateur en question. Le serveur AB-AS met en oeuvre notamment des opérations de création et de mise à jour du carnet d'adresses (y compris le contrôle de son contenu).

Le serveur O-AS renvoie à l'infrastructure du réseau IMS le message SIP OPTIONS et ce dernier transmet un message correspondant au destinataire final du message, c'est-à-dire au poste UE_{B}. Ainsi la requête SIP OPTIONS envoyée par le poste UE_{A} arrive bien auprès de son destinataire UE_{B}, comme dans le cas classique mais, en l'espèce, ces renseignements aptes à alimenter un carnet d'adresses ont été lus.

Tout étant en ordre, le poste UE_{B} transmet une réponse SIP 200 OK qui est reçu au niveau du réseau IMS et aiguillé vers le serveur O-AS qui en prend note. Le serveur O-AS renvoie le message SIP 200 OK à l'infrastructure de réseau IMS et le message correspondant est acheminé alors à l'utilisateur UE_{A}.

La figure 7 représente des étapes d'un premier procédé complémentaire selon un mode de réalisation de l'invention. Ce premier procédé complémentaire peut être mis en oeuvre quand le message SIP 200 OK émise pour répondre à une requête SIP OPTIONS comporte une carte de visite.

Le premier procédé complémentaire comprend une étape EXTCaV selon laquelle les coordonnées du contact objet de la carte de visite sont extraites de la réponse SIP 200 OK (désigné RpSIP(CaV) sur la figure 7). Par coordonnées on entend tout renseignement se rapportant au contact, non seulement son numéro de téléphone mais aussi son adresse email, son titre, sa profession, etc. Le premier procédé complémentaire comporte alors le renseignement du carnet d'adresses sur la base des coordonnées ainsi extraites (désignées coord sur la figure 7).

De la même manière que le procédé de la figure 4, le premier procédé complémentaire de la figure 7 peut s'inscrire dans un cadre selon lequel les messages SIP concernés (ici les messages SIP 200 OK répondant à une requête SIP OPTIONS) sont aiguillés vers un dispositif spécifique qui sert à la mise en oeuvre des étapes d'extraction des coordonnées et de renseignement du carnet d'adresses, ainsi qu'une étape de réacheminement des requêtes. Des étapes optionnelles d'aiguillage (AIG sur la figure) et de réacheminement (RE-ACH sur la figure) sont indiquées en pointillés sur la figure 7.

La figure 8 représente de manière simplifiée, des messages qui transitent entre les différents éléments de la configuration de la figure 5 lors de la mise en oeuvre du premier procédé complémentaire dans le cadre de l'interception d'une réponse SIP 200 OK qui comporte une carte de visite. Selon cet exemple de mise en oeuvre le serveur S-GCA de la figure 5 réalise des fonctions d'extraction de coordonnées, de renseignement du carnet d'adresses et de réacheminement des réponses SIP 200 OK de la figure 7, en plus de la réalisation des fonctions liées à l'interception des requêtes SIP OPTIONS décrites en relation avec la figure 6.

Seules les différences entre la figure 8 et la figure 6 seront commentées ici. Selon le premier procédé complémentaire telle qu'illustrée par la figure 8, quand le serveur O-AS reçoit la réponse SIP 200 OK transmis par le réseau IMS et comportant, dans un champ optionnel, une carte de visite, il en extrait les détails de la carte de visite et transmet ces renseignements au serveur AB-AS dans un deuxième message log information(). Le serveur AB-AS procède à la mise à jour approprié du carnet d'adresses sur la base du contenu de la carte de visite.

L'aiguillage des requêtes SIP vers le serveur S-GCA peut se faire de diverses manières. Une approche pour réaliser cet aiguillage consiste à définir un critère de filtrage iFC au niveau d'une entité S-CSCF du réseau IMS. Pour en faciliter l'exposé, la figure 9 représente un exemple de mise en oeuvre spécifique de l'architecture de la figure 5.

Selon l'exemple de la figure 9, la fonction S-CSCF du CSCF (« call session control function ») assure la déviation des requêtes SIP OPTIONS vers le serveur de gestion de carnet d'adresses S-GCA en appliquant un critère de filtrage iFC approprié, notamment un critère de filtrage iFC approprié chargé depuis le HSS (serveur d'abonnement de domicile). Selon la mise en oeuvre, le critère de filtrage peut consister en un critère générique qui dirige toutes les requêtes SIP OPTIONS vers le S-GCA (notamment vers l'O-AS selon l'exemple de la figure 9) ou un critère de filtrage particulier qui dirige vers le S-GCA les requêtes SIP OPTIONS d'un utilisateur déterminé. L'utilisation de filtres particuliers permet de limiter l'établissement d'un carnet d'adresses côté réseau aux seuls abonnés ayant souscrit au service.

Selon l'exemple de la figure 9 le serveur S-GCA dispose d'une mémoire ou module de stockage, MEM, qui stocke les carnets d'adresse. Toutefois, la localisation précise du module de stockage n'est pas une caractéristique essentielle de l'invention et, en particulier, il n'est pas nécessaire à ce que ce module fasse partie intégrante du S-GCA; tant que ce module soit accessible au serveur S-GCA il peut prendre une forme quelconque (disque dur de grand capacité, mémoire, etc.) et être localisé à différents endroits.

Selon l'exemple de la figure 9, le poste émetteur et le poste récepteur sont tous les deux des dispositifs SIP, c'est-à-dire un dispositif qui comporte un UAS SIP (un serveur d'agent utilisateur SIP) et un UAC SIP (un client d'agent utilisateur SIP). Toutefois, ce mode de réalisation de l'invention n'est pas limité à un tel cas : les différents postes peuvent avoir des capacités hétérogènes et peuvent disposer de la fonctionnalité SIP grâce à une passerelle.

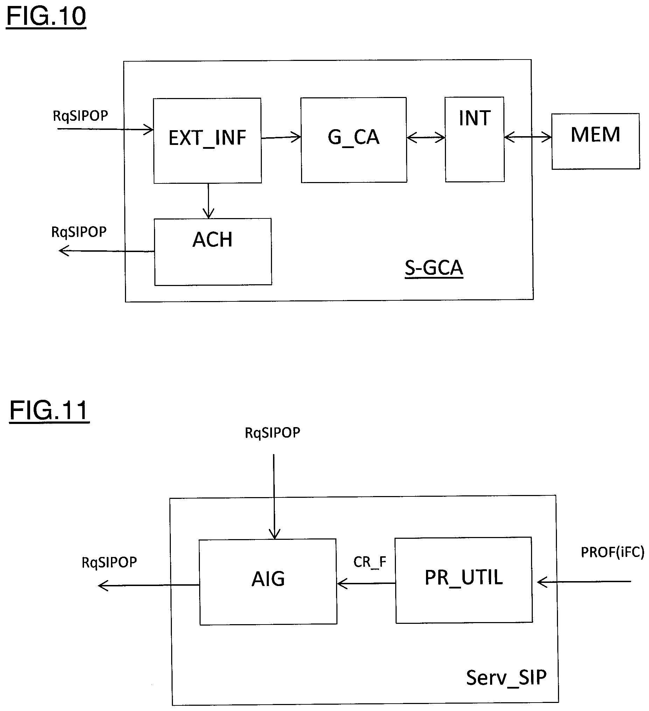

La figure 10 représente de manière schématique les composants d'un serveur S-GCA selon un mode de réalisation de l'invention. Le serveur S-GCA selon le présent mode de réalisation comporte une unité d'extraction de renseignements, EXT_INF, une unité de gestion de carnet d'adresses, G_CA, une interface, INT, vers un module de stockage externe, MEM, et une unité d'acheminement, ACH. L'unité d'extraction de renseignements , EXT_ID est configurée pour recevoir des requêtes SIP OPTIONS, RqSIPOP, et d'en extraire des renseignements aptes à alimenter/mettre à jour des enregistrements d'un carnet d'adresses. L'unité de gestion de carnet d'adresses, G_CA, assure la création et la mise à jour des carnets d'adresse stockés dans le module de stockage, MEM, l'unité de gestion de carnet d'adresses accédant au module de stockage MEM via l'interface INT. L'unité d'acheminement, ACH, assure l'acheminement des requêtes SIP sur la route vers le destinataire de la requête concernée.

La figure 11 représente de manière schématique les composants d'un serveur SIP, Serv_SIP, selon un mode de réalisation de l'invention, configuré pour assurer une fonction de S-CSCF. Le serveur, Serv_SIP, selon le présent mode de réalisation comporte une unité d'aiguillage, AIG, ainsi qu'une unité de chargement de profil d'utilisateur, PR_UTIL. L'unité d'aiguillage, AIG, décide l'acheminement d'une requête SIP OPTIONS, RqSIPOP, en fonction d'un critère, CR_F, fourni par l'unité de chargement de profil d'utilisateur, PR_UTIL. L'unité de chargement de profil d'utilisateur, PR_UTIL, est configurée pour charger un profil d'utilisateur, PROF(iFC) qui comporte, entre autres, des critères pour gérer l'acheminement des messages SIP conformément aux procédures mentionnés ci-dessus. Selon un mode de réalisation de l'invention l'unité de chargement de profil d'utilisateur, PR_UTIL, est configurée pour charger le profil d'utilisateur depuis un HSS (connu selon l'appellation «Home Subscriber Server », c'est-à-dire serveur d'abonnés de domicile) du réseau, notamment celui du poste émettant une requête SIP OPTIONS en cours de traitement, et ce profil comporte un iFC qui définit le critère CR_F qui sera appliqué.

Selon un deuxième procédé complémentaire prévu par un mode de réalisation de l'invention, les contacts peuvent eux-mêmes se connecter au dispositif de serveur S-GCA pour actualiser les informations les concernant dans un carnet d'adresses d'utilisateur particulier et, notamment, se connecter directement au serveur AB-AS. Dans une réalisation particulière la requête SIP OPTIONS transmise au contact contient un champ optionnel qui indique l'URL d'une interface web permettant de réaliser cette actualisation. Selon un mode de réalisation particulier de l'invention le serveur S-GCA insère ce champ optionnel dans la requête SIP OPTIONS avant l'acheminement de la requête à son destinataire. Selon un mode de réalisation particulier de l'invention l'équipement l'utilisateur de l'expéditeur du message SIP OPTIONS est configuré pour insérer ce champ optionnel dans la requête SIP OPTIONS. Le contact est ainsi notifié à travers les messages SIP OPTIONS que l'utilisateur l'a inclut dans sa liste de contacts, ouvrant la voie à un service du genre réseau social.

Bien que des modes de réalisation particuliers de la présente invention aient été décrits ci-dessus, l'homme du métier comprendra que diverses modifications et aménagements peuvent se pratiquer dans ceux-ci sans sortir du cadre de la présente invention.

Par ailleurs, la répartition de fonctions entre les différentes unités, modules et serveurs représentés sur les figures n'est qu'un exemple non limitatif, des répartitions différentes étant prévues par l'invention. Plus particulièrement, chacune des fonctions évoquées peut être réalisée en se servant d'un seul ou de plusieurs unités, modules, serveurs, ou équipements, et plusieurs fonctions peuvent être réalisées par une seul unité, module, serveur ou équipement.

## Revendications

1. Procédé de gestion d'un carnet d'adresses utilisateur déporté, le procédé étant exécuté sur un serveur d'applications (S-GCA) et comprenant :
une étape d'extraction (EXT), depuis un message transitant sur un réseau de communication, de renseignements (Info) se rapportant à un expéditeur et à un destinataire dudit message,
une étape de sélection, en fonction de l'expéditeur dudit message, d'un carnet d'adresses déporté à créer ou à mettre à jour, et
une étape de création ou de mise à jour d'au moins un enregistrement du carnet d'adresses sélectionné à l'étape de sélection, en fonction des renseignements de destinataire extraits dudit message ;
**caractérisé en ce que** :
ledit message correspond à une requête SIP OPTIONS du protocole d'initiation de session SIP (Session Initiation Protocol), et que l'étape d'extraction comporte l'extraction de renseignements depuis ladite requête SIP OPTIONS, ladite requête SIP OPTIONS étant envoyée par un équipement dudit expéditeur et constituant une interrogation quant aux capacités de l'équipement dudit destinataire.

2. Procédé selon la revendication 1, **caractérisé en ce qu'**il comprend :
une étape d'extraction, depuis une réponse à ladite requête SIP OPTIONS (RqSIPOP), de renseignements se rapportant à l'expéditeur de ladite réponse, et
une étape (EdCA) de mise à jour du carnet d'adresses déporté sélectionné à l'étape de sélection, en fonction des renseignements d'expéditeur extraits de ladite réponse.

3. Procédé selon la revendication 2, **caractérisé en ce que** l'étape (EXTCaV) d'extraction de renseignements depuis ladite réponse (RpSIP(CaV)) à ladite requête SIP OPTIONS (RqSIPOP) comporte le prélèvement de renseignements (coord) à partir d'une carte de visite dont le contenu ou l'adresse est véhiculé par ladite réponse (RpSIP(CaV)), et l'étape de mise à jour du carnet d'adresses déporté, en fonction des renseignements d'expéditeur (coord) extraits de ladite réponse (RpSIP(CaV)), comporte une étape (EdCA) d'alimentation du carnet d'adresses déporté sélectionné, sur la base du contenu de ladite carte de visite.

4. Procédé selon la revendication 2, **caractérisé en ce que** l'étape (EXT) d'extraction de renseignements depuis ladite réponse à ladite requête SIP OPTIONS comporte l'extraction de renseignements indiquant les capacités de l'équipement (UE_{B}) de l'expéditeur de ladite réponse, et l'étape de mise à jour du carnet d'adresses déporté, en fonction des renseignements d'expéditeur extraits de ladite réponse, comporte une étape d'addition au carnet d'adresses déporté sélectionné, de renseignements indiquant les capacités de l'équipement (UE_{B}) de l'expéditeur de ladite réponse.

5. Procédé selon l'une quelconque des revendications 1 à 4, **caractérisé en ce qu'**il comporte une étape consistant à synchroniser, avec le carnet d'adresses déporté sélectionné lors de l'étape de sélection, un carnet d'adresses d'un équipement utilisateur (UE_{A}) de l'expéditeur de ladite requête SIP OPTIONS (RqSIPOP).

6. Procédé selon l'une quelconque des revendications 1 à 5, **caractérisé en ce que** ladite requête SIP OPTIONS (RqSIPOP) est une requête configurée pour procurer des renseignements indicatifs des modes de communication que peut entretenir l'équipement destinataire.

7. Procédé selon l'une quelconque des revendications 1 à 6, **caractérisé en ce qu'**il comprend :
une étape de mise à jour d'un enregistrement du carnet d'adresses déporté sélectionné, en fonction de données d'actualisation fournies via une interface web par le contact objet de l'enregistrement.

8. Procédé selon la revendication 7, **caractérisé en ce qu'**il comprend :
une étape de transmission de ladite requête SIP OPTIONS (RqSIPOP) vers son destinataire en incluant, dans ladite requête SIP OPTIONS (RqSIPOP), un champ identifiant l'adresse internet de ladite l'interface web.

9. Procédé selon l'une quelconque des revendications 1 à 8, **caractérisé en ce que** ledit carnet d'adresses déporté est hébergé au niveau du serveur (S-GCA) du réseau de communication, ledit serveur (S-GCA) mettant en oeuvre les différentes étapes d'extraction de renseignements (EXT), de sélection d'un carnet d'adresses, et de mise à jour du carnet d'adresses sélectionné.

10. Programme d'ordinateur comportant des instructions pour la mise en oeuvre du procédé selon l'une quelconque des revendications 1 à 9 lorsque ce programme est exécuté par un processeur.

11. Serveur d'applications (S-GCA) comprenant :
une interface (INT) configurée pour communiquer avec un module de stockage (MEM) configuré pour stocker un carnet d'adresses utilisateur hébergé en dehors d'un équipement utilisateur,
une unité d'extraction de renseignements (EXT_INF) configurée pour extraire, depuis un message(RqSIPOP), transitant sur un réseau de communication, de renseignements se rapportant à l'expéditeur et au destinataire dudit message (RqSIPOP); et
une unité de gestion de carnet d'adresses (G_CA) configuré pour :
sélectionner, en fonction de l'expéditeur dudit message, un carnet d'adresses à créer ou à mettre à jour dans ledit module de stockage (MEM), et
créer ou mettre à jour les enregistrements de contact du carnet d'adresses sélectionné, en fonction de renseignements de destinataire extraits dudit message (RqSIPOP) par l'unité d'extraction (EXT_INF) ;
**caractérisé en ce que** ledit message correspond à une requête SIP OPTIONS du protocole d'initiation de session SIP (Session Initiation Protocol), et que l'unité d'extraction de renseignements est configurée pour extraire des renseignements depuis ladite requête SIP OPTIONS, ladite requête SIP OPTIONS étant envoyée par un équipement dudit expéditeur et constituant une interrogation quant aux capacités de l'équipement dudit destinataire.

12. Serveur d'applications (S-GCA) selon la revendication 11, **caractérisé en ce que** l'unité d'extraction de renseignements (EXT_INF) est configurée pour extraire depuis une réponse (RpSIP(CaV)) à ladite requête SIP OPTIONS, le contenu ou l'adresse d'une carte de visite se rapportant à l'expéditeur de ladite réponse (RpSIP(CaV)), et **en ce que** l'unité de gestion de carnet d'adresses (G_CA) est configurée pour mettre à jour des enregistrements de contact du carnet d'adresses sélectionné, sur la base du contenu de ladite carte de visite.

13. Serveur d'applications (S-GCA) selon la revendication 11 ou 12, **caractérisé en ce qu'**il comprend une unité de modification de message configurée pour introduire dans une requête SIP OPTIONS une adresse d'une interface web permettant au destinataire de ladite requête de mettre à jour les détails le concernant dans un carnet d'adresses de l'expéditeur de ladite requête.

## Patentansprüche

1. Verfahren zur Verwaltung eines entfernten Benutzer-Adressbuchs, wobei das Verfahren auf einem Anwendungsserver (S-GCA) ausgeführt wird und umfasst:
einen Schritt der Extraktion (EXT), aus einer Nachricht, die ein Kommunikationsnetz durchquert, von Informationen (Info), die sich auf einen Absender und auf einen Adressaten der Nachricht beziehen,
einen Schritt der Auswahl, in Abhängigkeit vom Absender der Nachricht, eines entfernten Adressbuchs, das zu erzeugen oder zu aktualisieren ist, und
einen Schritt der Erzeugung oder der Aktualisierung wenigstens eines Eintrags des Adressbuchs, das im Schritt der Auswahl ausgewählt wurde, in Abhängigkeit von den Adressatinformationen, die aus der Nachricht extrahiert wurden;
**dadurch gekennzeichnet, dass**
die Nachricht einer SIP OPTIONS-Anforderung des Sitzungsinitiierungsprotokolls SIP (Session Initiation Protocol) entspricht, und dass der Schritt der Extraktion die Extraktion von Informationen aus der SIP OPTIONS-Anforderung umfasst, wobei diese SIP OPTIONS-Anforderung von einer Einrichtung des Absenders gesendet wird und eine Abfrage betreffs der Kapazitäten der Einrichtung des Adressaten darstellt.

2. Verfahren nach Anspruch 1, **dadurch gekennzeichnet, dass** es umfasst:
einen Schritt der Extraktion, aus einer Antwort auf die SIP OPTIONS-Anforderung (RqSIPOP), von Informationen, die sich auf den Absender der Antwort beziehen, und
einen Schritt (EdCA) der Aktualisierung des entfernten Adressbuchs, das im Schritt der Auswahl ausgewählt wurde, in Abhängigkeit von den Absenderinformationen, die aus der Antwort extrahiert wurden.

3. Verfahren nach Anspruch 2, **dadurch gekennzeichnet, dass** der Schritt (EXTCaV) der Extraktion von Informationen aus der Antwort (RpSIP(CaV)) auf die SIP OPTIONS-Anforderung (RqSIPOP) die Entnahme von Informationen (coord) aus einer Visitenkarte umfasst, deren Inhalt oder Adresse von der Antwort (RpSIP(CaV)) transportiert wird, und der Schritt der Aktualisierung des entfernten Adressbuchs in Abhängigkeit von den Absenderinformationen (coord), die aus der Antwort (RpSIP(CaV)) extrahiert wurden, einen Schritt (EdCA) der Einspeisung in das ausgewählte entfernte Adressbuch auf der Basis des Inhalts der Visitenkarte umfasst.

4. Verfahren nach Anspruch 2, **dadurch gekennzeichnet, dass** der Schritt (EXT) der Extraktion von Informationen aus der Antwort auf die SIP OPTIONS-Anforderung die Extraktion von Informationen umfasst, welche die Kapazitäten der Einrichtung (UE_{B}) des Absenders der Antwort angeben, und der Schritt der Aktualisierung des entfernten Adressbuchs in Abhängigkeit von den Absenderinformationen, die aus der Antwort extrahiert wurden, einen Schritt der Hinzufügung von Informationen, welche die Kapazitäten der Einrichtung (UE_{B}) des Absenders der Antwort angeben, zu dem ausgewählten entfernten Adressbuch umfasst.

5. Verfahren nach einem der Ansprüche 1 bis 4, **dadurch gekennzeichnet, dass** es einen Schritt umfasst, der darin besteht, ein Adressbuch einer Benutzelrreinrichtung (UE_{A}) des Absenders der SIP OPTIONS-Anforderung (RqSIPOP) mit dem entfernten Adressbuch zu synchronisieren, das im Schritt der Auswahl ausgewählt wurde.

6. Verfahren nach einem der Ansprüche 1 bis 5, **dadurch gekennzeichnet, dass** die SIP OPTIONS-Anforderung (RqSIPOP) eine Anforderung ist, die dafür ausgelegt ist, Informationen zu beschaffen, die für die Kommunikationsmodi indikativ sind, welche die Einrichtung des Adressaten unterstützen kann.

7. Verfahren nach einem der Ansprüche 1 bis 6, **dadurch gekennzeichnet, dass** es umfasst:
einen Schritt der Aktualisierung eines Eintrags des ausgewählten entfernten Adressbuchs in Abhängigkeit von Aktualisierungsdaten, die über eine Web-Schnittstelle von dem Kontakt, der Gegenstand des Eintrags ist, geliefert werden.

8. Verfahren nach Anspruch 7, **dadurch gekennzeichnet, dass** es umfasst:
einen Schritt der Übertragung der SIP OPTIONS-Anforderung (RqSIPOP) zu ihrem Adressaten, wobei in die SIP OPTIONS-Anforderung (RqSIPOP) ein Feld eingefügt wird, das die Internetadresse der Web-Schnittstelle identifiziert.

9. Verfahren nach einem der Ansprüche 1 bis 8, **dadurch gekennzeichnet, dass** das entfernte Adressbuch auf dem Server (S-GCA) des Kommunikationsnetzes gehostet wird, wobei der Server (S-GCA) die verschiedenen Schritte der Extraktion von Informationen (EXT), der Auswahl eines Adressbuchs und der Aktualisierung des ausgewählten Adressbuchs durchführt.

10. Computerprogramm, welches Anweisungen zur Durchführung des Verfahrens nach einem der Ansprüche 1 bis 9, wenn dieses Programm von einem Prozessor ausgeführt wird, umfasst.

11. Anwendungsserver (S-GCA), welcher umfasst:
eine Schnittstelle (INT), die dafür ausgelegt ist, mit einem Speichermodul (MEM) zu kommunizieren, das dafür ausgelegt ist, ein Benutzer-Adressbuch zu speichern, das außerhalb einer Benutzereinrichtung gehostet wird;
eine Informationenextraktionseinheit (EXT_INF), die dafür ausgelegt ist, aus einer Nachricht (RqSIPOP), die ein Kommunikationsnetz durchquert, Informationen zu extrahieren, die sich auf den Absender und auf den Adressaten der Nachricht (RqSIPOP) beziehen; und
eine Adressbuch-Verwaltungseinheit (G_CA), die dafür ausgelegt ist:
in Abhängigkeit vom Absender der Nachricht ein Adressbuch auszuwählen, das in dem Speichermodul (MEM) zu erzeugen oder zu aktualisieren ist, und
die Kontakteinträge des ausgewählten Adressbuchs in Abhängigkeit von Adressatinformationen, die durch eine Extraktionseinheit (EXT_INF) aus der Nachricht (RqSIPOP) extrahiert wurden, zu erzeugen oder zu aktualisieren;
**dadurch gekennzeichnet, dass** die Nachricht einer SIP OPTIONS-Anforderung des Sitzungsinitiierungsprotokolls SIP (Session Initiation Protocol) entspricht, und dass die Informationenextraktionseinheit dafür ausgelegt ist, Informationen aus der SIP OPTIONS-Anforderung zu extrahieren, wobei diese SIP OPTIONS-Anforderung von einer Einrichtung des Absenders gesendet wird und eine Abfrage betreffs der Kapazitäten der Einrichtung des Adressaten darstellt.

12. Anwendungsserver (S-GCA) nach Anspruch 11, **dadurch gekennzeichnet, dass** die Informationenextraktionseinheit (EXT_INF) dafür ausgelegt ist, aus einer Antwort (RpSIP(CaV)) auf die SIP OPTIONS-Anforderung den Inhalt oder die Adresse einer Visitenkarte zu extrahieren, die sich auf den Absender der Antwort (RpSIP(CaV)) bezieht, und dadurch, dass die Adressbuch-Verwaltungseinheit (G_CA) dafür ausgelegt ist, Kontakteinträge des ausgewählten Adressbuchs auf der Basis des Inhalts der Visitenkarte zu aktualisieren.

13. Anwendungsserver (S-GCA) nach Anspruch 11 oder 12, **dadurch gekennzeichnet, dass** er eine Nachrichtenmodifikationseinheit umfasst, die dafür ausgelegt ist, in eine SIP OPTIONS-Anforderung eine Adresse einer Web-Schnittstelle einzufügen, die dem Adressaten dieser Anforderung ermöglicht, die ihn betreffenden Details in einem Adressbuch des Absenders der Anforderung zu aktualisieren.

## Claims

1. Method for managing a remote user address book, the method being executed on an application server (S-GCA) and comprising:
a step (EXT) of extracting, from a message transiting on a communication network, information (Info) relating to a sender and to a recipient of said message,
a step of selecting, on the basis of the sender of said message, a remote address book to be created or to be updated, and
a step of creating or of updating at least one record in the address book selected in the selection step on the basis of the recipient information extracted from said message;
**characterized in that**:
said message corresponds to a SIP OPTIONS request of the SIP (Session Initiation Protocol) protocol, and that the extraction step includes extracting information from said SIP OPTIONS request, said SIP OPTIONS request being sent by a device of said sender and constituting an interrogation as to the capabilities of the device of said recipient.

2. Method according to Claim 1, **characterized in that** it comprises:
a step of extracting, from a response to said SIP OPTIONS request (RqSIPOP), information relating to the sender of said response, and
a step (EdCA) of updating the remote address book selected in the selection step on the basis of the sender information extracted from said response.

3. Method according to Claim 2, **characterized in that** the step (EXTCaV) of extracting information from said response (RpSIP(CaV)) to said SIP OPTIONS request (RqSIPOP) includes taking information (coord) from a calling card whose content or whose address is conveyed by said response (RpSIP(CaV)), and the step of updating the remote address book on the basis of the sender information (coord) extracted from said response (RpSIP(CaV)) includes a step (EdCA) of adding to the selected remote address book on the basis of the content of said calling card.

4. Method according to Claim 2, **characterized in that** the step (EXT) of extracting information from said response to said SIP OPTIONS request includes extracting information indicating the capabilities of the device (UE_{B}) of the sender of said response, and the step of updating the remote address book on the basis of the sender information extracted from said response includes a step of adding, to the selected remote address book, information indicating the capabilities of the device (UE_{B}) of the sender of said response.

5. Method according to any one of Claims 1 to 4, **characterized in that** it includes a step of synchronizing, with the remote address book selected in the selection step, an address book of a user device (UE_{A}) of the sender of said SIP OPTIONS request (RqSIPOP).

6. Method according to any one of Claims 1 to 5, **characterized in that** said SIP OPTIONS request (RqSIPOP) is a request configured to obtain information indicating the communication modes that the recipient device is able to support.

7. Method according to any one of Claims 1 to 6, **characterized in that** it comprises:
a step of updating a record in the selected remote address book on the basis of update data supplied via a web interface by the contact to whom the record relates.

8. Method according to Claim 7, **characterized in that** it comprises:
a step of transmitting said SIP OPTIONS request (RqSIPOP) to its recipient, including a field identifying the Internet address of said web interface in said SIP OPTIONS request (RqSIPOP).

9. Method according to any one of Claims 1 to 8, **characterized in that** said remote address book is hosted on the server (S-GCA) of the communication network, said server (S-GCA) implementing the various steps of extracting information (EXT), selecting an address book and updating the selected address book.

10. Computer program including instructions for implementing the method according to any one of Claims 1 to 9 when this program is executed by a processor.

11. Application server (S-GCA) comprising:
an interface (INT) configured to communicate with a storage module (MEM) that is configured to store a user address book hosted outside of a user device,
an information extraction unit (EXT_INF) configured to extract, from a message (RqSIPOP) transiting on a communication network, information relating to the sender and to the recipient of said message (RqSIPOP); and
an address book management unit (G_CA) configured to:
select, on the basis of the sender of said message, an address book to be created or to be updated in said storage module (MEM), and
create or update the contact records in the selected address book on the basis of recipient information extracted from said message (RqSIPOP) by the extraction unit (EXT_INF);
**characterized in that** said message corresponds to a SIP OPTIONS request of the SIP (Session Initiation Protocol) protocol, and that the information extraction unit is configured to extract information from said SIP OPTIONS request, said SIP OPTIONS request being sent by a device of said sender and constituting an interrogation as to the capabilities of the device of said recipient.

12. Application server (S-GCA) according to Claim 11, **characterized in that** the information extraction unit (EXT_INF) is configured to extract, from a response (RpSIP(CaV)) to said SIP OPTIONS request, the content or the address of a calling card relating to the sender of said response (RpSIP(CaV)), and **in that** the address book management unit (G_CA) is configured to update contact records in the selected address book on the basis of the content of said calling card.

13. Application server (S-GCA) according to Claim 11 or 12, **characterized in that** it comprises a message modification unit configured to insert an address of a web interface into a SIP OPTIONS request, allowing the recipient of said request to update the details concerning him in an address book of the sender of said request.
